# EUROPÄISCHE PATENTSCHRIFT

(11) **EP 3 535 338 B1**
(45) Veröffentlichungstag und Bekanntmachung des Hinweises auf die Patenterteilung: **12.02.2020**
(21) Anmeldenummer: 17737512.8
(22) Anmeldetag: 29.06.2017
(51) Int. Cl.: C09D 161/06

(54) **MODIFIZIERTE REAKTIVHARZZUSAMMENSETZUNGEN UND DEREN VERWENDUNG ZUR BESCHICHTUNG VON STÜTZMITTELN**
MODIFIED REACTIVE RESIN COMPOSITIONS AND USE THEREOF FOR COATING PROPPING AGENTS
COMPOSITIONS DE RÉSINE ACTIVE MODIFIÉES ET LEUR UTILISATION POUR LE REVÊTEMENT D'AGENTS DE SOUTÈNEMENT

(30) Priorität: 02.11.2016 WO PCT/EP2016/076383
(43) Veröffentlichungstag der Anmeldung: 11.09.2019
(73) Patentinhaber: Wacker Chemie AG, 81737 München (DE)
(72) Erfinder: KNÖR, Sebastian, 84547 Emmerting (DE); CALIMENTE, Daniel, Saline, Michigan 48176 (US); SCHLOSSER, Arndt, 84533 Stammham (DE)
(74) Vertreter: Mieskes, Klaus Theoderich
(86) Internationale Anmeldenummer: PCT/EP2017/066220
(87) Internationale Veröffentlichungsnummer: WO 2018/082818

(56) Entgegenhaltungen:
- WO-A1-2010/060861
- JP-B2- 3 466 239
- US-A- 5 952 439
- US-A1- 2013 026 662

## Beschreibung

Die vorliegende Erfindung betrifft modifizierte Reaktivharzzusammensetzungen und ihre Verwendung als Beschichtungsmittel für Stützmaterialien, die im sogenannten Hydraulic Fracturing (=Fracking) eingesetzt werden.

Das Fracking-Verfahren wird in der Erdöl- und Erdgasförderung eingesetzt und ist eine Methode zur Erzeugung, Weitung und Stabilisierung von Rissen im Gestein einer Lagerstätte im tiefen Untergrund, mit dem Ziel, die Permeabilität der Lagerstätten-Gesteine zu erhöhen. Dadurch können darin befindliche Gase oder Flüssigkeiten leichter und beständiger zur Bohrung fließen und gewonnen werden.

Die erzeugten Risse müssen mit Stützmitteln offengehalten werden. Die derzeit verfügbaren beschichteten oder unbeschichteten Stützmittel sind spröde und weisen nicht die notwendige Druckfestigkeit für die Förderung in großen Tiefen auf. Durch das Brechen des Stützmittels unter dem hohen Druck werden Feinteile frei, die die Risse verstopfen und die Öl- bzw. Gasfördermenge reduzieren.

Die nach dem Stand der Technik verfügbaren beschichteten Stützmittel weisen eine im Vergleich zu den unbeschichteten Stützmitteln verbesserte Beständigkeit auf. Der Effekt der Beschichtung, z.B. mit organischen Harzen, ist aber dadurch limitiert, dass die verfügbaren Beschichtungen selbst sehr spröde sind und ebenfalls zum Bruch bzw. zur Abplatzung neigen.

### Stand der Technik

WO2008088449 A2 offenbart eine Möglichkeit zur Verringerung der Sprödigkeit von Beschichtungen solcher Partikel, wobei thermisch härtende Reaktivharze wie beispielsweise Epoxy-Harze mit Block-Copolymeren und Haftvermittlern versetzt werden, um so eine Verbesserung der Schlagzähigkeit der Beschichtung zu erreichen. Nachteilig ist neben der Verwendung zweier Additive, dass der Zähigkeitsverbesserer zudem ein teures und aufwändig herzustellendes Blockpolymer ist.

US8852682B2 offenbart Partikel zum Einsatz als Stützmaterialien, die eine mehrschichtige, ineinander verschachtelte Beschichtung aufweisen. Ein Füllstoff wird explizit während der einzelnen Prozessschritte zudosiert. Nachteilig ist das aufwändige Verfahren. Zur Beschichtung werden verschiedene Harze wie beispielsweise Phenolharze verwendet, die beispielweise als verstärkende Füllstoffe pyrogene Kieselsäuren enthalten.

US5422183A offenbart Partikel zum Einsatz als Stützmaterialien in Fracking-Verfahren, die ebenfalls eine zweischichtige Beschichtung aus Harzen aufweisen. Zur Beschichtung werden beispielsweise Phenolharze verwendet, wobei als Füllstoff ebenfalls pyrogene Kieselsäuren eingesetzt werden. Dieser wird nach dem ersten Coating-Schritt in die Zwischenphase der Einzelschichten eingebracht.

Nachteilig bei beiden Schriften ist das sehr aufwändige, mehrstufige Verfahren, das teuer und zudem schwer zu kontrollieren ist.

US20140124200A offenbart die Verwendung von Hybridmaterialien hergestellt durch chemische Verbindung von organischen Harzen und Siliconharzen zur Beschichtung von Stützmaterialen. Nachteilig sind hier ein zusätzlicher, aufwendiger Prozess zur chemischen Modifikation und die schwer zu kontrollierende Produktqualität bei Reaktion zweier verzweigter Polymere.

US2012088699A offenbart ein beschichtetes Partikel, mit mindestens zwei oleophilen und hydrophoben Harzen im Verhältnis 1:0,1-10, wobei unter anderem Siliconharze eingesetzt werden können. Nachteilig ist die Verwendung von Siliconharzen in sehr hohen Mengen von mindestens 10 Gew.-%, was ökonomisch unattraktiv ist.

Weiterhin sind im Stand der Technik allgemein Verfahren bekannt, die zur Verringerung der Sprödigkeit von Beschichtungen führen, die ein Reaktionsharz verwenden, welches an sich bereits eine vergleichsweise geringe Sprödigkeit aufweist, zum Beispiel Epoxidharze. WO2010060861A1 beschreibt beispielsweise ein homogenes Reaktionsharz, das eine Verbesserung der mechanischen Eigenschaften Bruchzähigkeit und Schlagzähigkeit als ausgehärteter duroplastischer Kunststoff zeigt. Dabei wird beispielsweise in einem ungehärteten Epoxidharz mindestens ein Organopolysiloxan homogen verteilt mit Hilfe eines Siliconorganocopolymers, welches als Dispergiermittel dient. In ähnlicher Weise lehren Könczöl L. et al. (KONCZOl L. et al; ISSN: 2021-8995; DOI: 10.1002/APP.1994.070540612) die Verwendung von Polysiloxan-Polycaprolacton-Blockcopolymeren zur Zähmodifizierung von Epoxidharzen.
Der Stand der Technik lehrt jedoch, dass diese extrinsische Zähmodifizierung nur funktioniert, wenn das Reaktivharz als solches eine gewisse intrinsische Zähigkeit aufweist, wie es bei Epoxidharzen der Fall ist. Für sehr spröde, glasartige Reaktivharze ist dieses Verfahren nicht geeignet.
(Li Zhongatao; Doktorarbeit aus dem Jahr 2000, mit dem Titel: "High fracture toughness and high modules silicone resins" veröffentlicht unter http://hdl.handle.net/1721.1/8301).

### Aufgabe der Erfindung

Aufgabe der vorliegenden Erfindung war daher die Bereitstellung von kostengünstigen Beschichtungsmitteln für Stützmittel, eines Verfahrens zur Beschichtung von Stützmitteln und der beschichteten Stützmittel. Dabei sollen diese Stützmittel nach Beschichtung und Aushärtung die notwendige Härte und Druckbeständigkeit aufweisen und gleichzeitig elastische Eigenschaften zeigen, damit es zu keinem Bruch oder zu Abplatzungen der Beschichtung kommt.

### Lösung der Aufgabe

Diese Aufgabe wird überraschenderweise gelöst von den erfindungsgemäßen modifizierten Reaktivharzzusammensetzungen.

Die erfindungsgemäßen Reaktivharzzusammensetzungen enthalten
- (A) 92-99,5 Gew.% mindestens eines Reaktivharzes, und
- (B) 0,5-8 Gew.% mindestens eines Siliconharzes,
   aus Einheiten der Formeln (Ia), (Ib), (VII) und (Id) 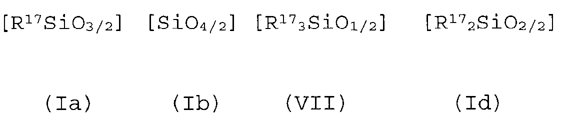 wobei
   R¹⁷ gleich oder unabhängig voneinander verschiedene einwertige, substituierte oder nicht substituierte organische Reste, die funktionelle Gruppen tragen oder nicht tragen, einen -OH oder einen Wasserstoffrest, bedeutet,
mit den Maßgaben, dass
- in (B) mindestens 20 mol% der Formel (Ia) oder (Ib) oder einer Mischung aus beiden enthalten sind,
- in (B) höchstens 50 mol% der Formel (Ib) enthalten sind,
- Alkoxygruppen als R¹⁷ zu mindestens 5 Gew.% in (B) enthalten sind.

### Komponente (A)

Bevorzugt enthält die erfindungsgemäße Reaktivharzzusammensetzung nur ein Reaktivharz (A).

Die Reaktivharze (A) müssen eine feste nichtklebrige Beschichtung bei Umgebungstemperaturen bilden. Dies ist erforderlich, damit die beschichteten Partikel rieselfähig bleiben, so dass sie sich nicht unter normalen Lagerbedingungen agglomerieren. Die Beschichtung kann im Wesentlichen ausgehärtet werden, so dass wenig oder keine Vernetzung bei Einwirkung von Bedingungen im Bohrloch erfolgt. Die Beschichtung kann auch nur teilweise gehärtet werden oder mit anderen reaktiven Gruppen versehen werden, sodass eine kovalente Vernetzung unter den Bedingungen im Bohrloch erfolgt.

Als Reaktionsharze (A) sind erfindungsgemäß alle polymeren oder oligomeren organischen Verbindungen geeignet, die mit einer für eine Härtungsreaktion ausreichenden Zahl geeigneter reaktiver Gruppen versehen sind. Dabei sind alle im Stand der Technik bekannten Reaktionsharze geeignet, die sich zu Duroplasten verarbeiten lassen, unabhängig vom jeweiligen Vernetzungsmechanismus, der bei der Härtung des jeweiligen Reaktionsharzes abläuft. Grundsätzlich lassen sie sich in drei Gruppen einteilen entsprechend der Art des Vernetzungsmechanismus durch Addition, Kondensation oder radikalische Polymerisation.

Aus der ersten Gruppe der durch Polyaddition vernetzten Reaktionsharze (A) werden bevorzugt ein oder mehrere Epoxidharze, Urethanharze und/oder lufttrocknende Alkydharze als Ausgangsmaterial ausgewählt. Epoxid- und Urethanharze werden in der Regel durch Zusatz stöchiometrischer Mengen eines Hydroxyl-, Amino-, Carboxyl- oder Carbonsäureanhydridgruppen enthaltenden Härters vernetzt, wobei die Härtungsreaktion durch Addition der Oxiran- bzw. Isocyanatgruppen des Harzes an die entsprechenden Gruppen des Härters erfolgt. Bei Epoxidharzen ist auch die sogenannte katalytische Härtung durch Polyaddition der Oxirangruppen selbst möglich. Lufttrocknende Alkydharze vernetzen durch Autoxidation mit Luftsauerstoff. Auch additionshärtende Siliconharze sind bekannt, vorzugsweise solche mit der Maßgabe, dass keine weiteren freien Silane enthalten sind.

Beispiele für die zweite Gruppe der durch Polykondensation vernetzten Reaktionsharze (A) sind vorzugsweise Kondensationsprodukte von Aldehyden, z.B. Formaldehyd, mit amingruppenhaltigen aliphatischen oder aromatischen Verbindungen, z.B. Harnstoff oder Melamin, oder mit aromatischen Verbindungen wie Phenol, Resorcin, Kresol usw., ferner Furanharze, gesättigte Polyesterharze und kondensationshärtende Silikonharze. Die Härtung erfolgt hierbei meist durch Temperaturerhöhung unter Abspaltung von Wasser, niedermolekularen Alkoholen oder anderen niedermolekularen Verbindungen.

Aus der dritten Gruppe der durch Polymerisation vernetzten Reaktionsharze sind ein oder mehrere Homo- oder Copolymerisate der Acrylsäure und/oder Methacrylsäure oder ihrer Ester, ferner ungesättigte Polyesterharze, Vinylesterharze und/oder Maleinimidharze als Ausgangsharze für die erfindungsgemäß modifizierten Reaktionsharze bevorzugt. Diese Harze weisen polymerisationsfähige Doppelbindungen auf, durch deren Polymerisation oder Copolymerisation die dreidimensionale Vernetzung bewirkt wird. Als Starter dienen zur Bildung freier Radikale befähigte Verbindungen, z.B. Peroxide, Peroxoverbindungen oder Azogruppen enthaltende Verbindungen.

Auch eine Initiierung der Vernetzungsreaktion durch energiereiche Strahlung, wie UV oder Elektronenstrahlung, ist möglich.

Nicht nur die vorstehend genannten Reaktionsharze (A), sondern auch alle anderen, die zur Herstellung von duroplastischen Kunststoffen geeignet sind, lassen sich in der erfindungsgemäß vorgeschlagenen Weise modifizieren und ergeben nach der Vernetzung und Härtung Duroplaste mit erheblich verbesserter Bruch- und Schlagzähigkeit, wobei andere wesentliche, für die Duroplasten charakteristische Eigenschaften, wie Festigkeit, Wärmeformbeständigkeit und Chemikalienresistenz, im Wesentlichen unbeeinflusst erhalten bleiben.

Die bevorzugten Reaktivharze (A) sind die Phenol-FormaldehydHarze. Diese Reaktivharze (A) umfassen wärmehärtende Phenolharze vom Resol-Typ und Phenol-Novolak-Harze, die durch Zugabe von Katalysator und Formaldehyd wärmereaktiv gemacht werden können. Die Reaktivharze (A) können entweder während der Beschichtung der Stützmittelpartikel vollständig ausgehärtet werden, oder nur teilweise gehärtet werden. Stützmittel mit nur teilweise gehärteter Beschichtung härten erst nach dem Einbringen in tiefere Erdschichten während des Fracking aus.

Besonders bevorzugt als Reaktivharze (A) sind Phenol-Novolak-Harze. Diese sind beispielsweise erhältlich bei Plastics Engineering Company, Sheboygan, USA, unter dem Namen Resin 14772. Wenn ein solches Reaktivharz verwendet wird, ist es erforderlich, dem Gemisch ein Vernetzungsmittel (C) hinzuzufügen, um die anschließende Aushärtung des Reaktivharzes zu bewirken. Hexamethylentetramin ist das bevorzugte Material (C) für diese Funktion, da es sowohl als Katalysator und als Formaldehydquelle dient.

(A) wird in Mengen von 92 Gew.-%, bevorzugt von mindestens 93 Gew.-% und insbesondere bevorzugt von mindestens 94 Gew.-% eingesetzt, sowie in Mengen von höchstens 99,5 Gew.-%, bevorzugt von höchstens 99 Gew.-% und insbesondere bevorzugt von höchstens 98 Gew.-%.

### Komponente (B)

Die erfindungsgemäßen Reaktivharzzusammensetzungen enthalten mindestens ein Siliconharz (B) in Mengen von mindestens 0,5 und höchstens 8 Gew.%, bevorzugt in Mengen 1 bis höchstens 7 Gew.%, besonders bevorzugt in Mengen von mindestens 2 und höchstens 6 Gew.%.

Die Siliconharze (B) können bei Raumtemperatur fest oder flüssig sein.

Die Siliconharze (B) sind vorzugsweise solche, die ein Molekulargewicht Mw von mindestens 500, bevorzugt mindestens 600, besonders bevorzugt mindestens 700, und höchstens 5000, bevorzugt höchstens 4000, besonders bevorzugt höchstens 3000 haben, wobei die Polydispersität höchstens 20, bevorzugt höchstens 18, besonders bevorzugt höchstens 16, insbesondere höchstens 15 ist.

Die Siliconharze (B) enthalten mindestens 20 mol%, bevorzugt mindestens 25 mol%, besonders bevorzugt mindestens 30 mol%, insbesondere mindestens 35 mol% Wiederholungseinheiten der Formel (Ia) oder (Ib) oder einer Mischung der Formeln (Ia) und (Ib), wobei Wiederholungseinheiten der Formel (Ib) in einer Menge von höchstens 50 mol%, bevorzugt höchstens 40 mol%, besonders bevorzugt höchstens 20 mol% enthalten sind. In einer besonders bevorzugten Ausführungsform sind keine Einheiten (Ib) in den Siliconharzen (B) enthalten.

Wiederholungseinheiten der Formel (Id) können in einer Menge bis zu 80 mol%, vorzugsweise bis zu 70 mol%, besonders bevorzugt bis zu 60 mol%, insbesondere bis zu 50 mol% in den Siliconharzen (B) enthalten sein. In einer weiteren Ausführungsform sind keine Einheiten (Id) in den erfindungsgemäß hergestellten Siliconharzen (B) enthalten.

Die Siliconharze (B) enthalten Alkoxygruppen als R¹⁷ zu mindestens 5 Gew.%, bevorzugt mindestens 8,5 Gew.%, und insbesondere bevorzugt mindestens 12 Gew.%. Beispiele für geeignete Alkoxygruppen als R¹⁷ sind Kohlenwasserstoffreste mit 1 bis 16 C-Atomen, die auch substituiert sein können. Besonders geeignet und somit bevorzugt sind Methoxy-, Ethoxy-, iso-Propoxy- und tert.-Butoxyreste und der p-Nitrophenoxyrest.

Alle weiteren R¹⁷ können unabhängig voneinander einwertige Kohlenwasserstoffreste sein, die substituiert oder unsubstituiert sind. Bevorzugt sind es reine Kohlenwasserstoffreste, bevorzugt mit 1 bis 16 Kohlenstoffatomen. Ausgewählte Beispiele für geeignete Kohlenwasserstoffreste R¹⁷ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Arylreste, wie der Phenyl-, Naphthyl-, Anthryl- und Phenanthrylrest, Alkarylreste, wie Tolylreste, Xylylreste und Ethylphenylreste, und Aralkylreste, wie der Benzylrest und der β-Phenylethylrest.

Bevorzugte Kohlenwasserstoffreste als Reste R¹⁷ sind Methyl, n-Propyl-, iso-Propyl-, Phenyl-, n-Octyl-, oder iso-Octyl-Reste, wobei der Methyl, der n-Propyl, der Phenyl- und der iso-OctylRest besonders bevorzugt ist, und der Methyl und der Phenyl-Rest insbesondere bevorzugt ist.

In Kombination mit den vorgenannte Alkoxygruppen sind im Siliconharz (B) in einer bevorzugten Ausführungsform mindestens 10 mol% aller Reste R¹⁷ unabhängig voneinander gleiche oder verschiedene einwertige, substituierte oder nicht substituierte organische Reste mit mind. 3 C-Atomen. Bevorzugt werden mindestens 15 mol%, besonders bevorzugt mindestens 20 mol%, insbesondere bevorzugt mindestens 25 mol%. Die vorgenannten Kohlenwasserstoffreste haben bevorzugt 3 bis 18 C-Atome.

Beispiele für organische substituierte Reste mit mind. 3 C-Atomen sind auch Polyether-Reste der allgemeinen Formel (XIX)

-CH₂CH₂(CH₂)ᵤOC₂H₄O)ᵥ(C₃HeO)_{w}(C₄H₈O)ₓR⁹ (XIX),

wobei
R⁹ einen Kohlenwasserstoffrest mit 1 bis 6 Kohlenstoffatomen **oder H,** bevorzugt Me **oder H** bedeutet,
u 0 oder eine ganze Zahl von 1 bis 16, vorzugsweise 1 bis 4, ist,
v 0 oder eine ganze Zahl von 1 bis 35, vorzugsweise 1 bis 25, ist,
w 0 oder eine ganze Zahl von 1 bis 35, vorzugsweise 1 bis 25 ist,
x 0 oder eine ganze Zahl von 1 bis 35, vorzugsweise 1 bis 25 ist,
mit der Maßgabe, dass die Summe v+w+x 1 bis 70, vorzugsweise 1 bis 50 ist.

In einer weiteren bevorzugten Ausführungsform der Siliconharze (B) tragen die Reste R¹⁷ unabhängig voneinander noch mindestens 1 mol-%, bevorzugt mindestens 2 mol-%, besonders bevorzugt mindestens 3 mol-%, insbesondere mindestens 4 mol-%, ganz besonders mindestens 6 mol-% unabhängig voneinander funktionelle Gruppen oder siliziumgebundenen Wasserstoff, nur in Kombination mit den vorgenannten Alkoxygruppen.

In einer insbesondere bevorzugten Ausführungsform der Siliconharze (B) tragen die Reste R¹⁷ unabhängig voneinander noch mindestens 1 mol-%, bevorzugt mindestens 2 mol-%, besonders bevorzugt mindestens 3 mol-%, insbesondere mindestens 4 mol-%, ganz besonders mindestens 6 mol-% unabhängig voneinander funktionelle Gruppen oder siliziumgebundenen Wasserstoff, in Kombination mit den vorgenannten Alkoxygruppen und gleichzeitig mit den einwertigen, substituierten oder nicht substituierten organischen Resten mit mind. 3 C-Atomen.

Beispiele für solche Reste R¹⁷ mit funktionellen Gruppen sind Glykolreste und Kohlenwasserstoffreste mit funktionellen organischen Gruppen ausgewählt aus der Gruppe der Phosphorsäureester, Phosphonsäureester, Epoxidfunktionen, Aminofunktionen, Methacrylatfunktionen, Carboxylfunktionen, Acrylatfunktionen, olefinisch oder acetylenisch ungesättigten Kohlenwasserstoffe.
Die jeweiligen funktionellen Gruppen können ggf. substituiert sein.

Die Reste R¹⁷ können ggf. hydroxy-, alkyloxy- oder trimethylsilylterminiert sein. In der Hauptkette können nicht benachbarte Kohlenstoffatome durch Sauerstoffatome ersetzt sein.

Die funktionellen Gruppen in R¹⁷ liegen in der Regel nicht direkt am Siliziumatom gebunden vor. Eine Ausnahme hiervon bilden die olefinischen oder acetylenischen Gruppen, die auch direkt siliziumgebunden vorliegen können, vor allem die Vinylgruppe. Die übrigen funktionellen Gruppen in R¹⁷ sind über Spacergruppen an das Siliziumatom gebunden, wobei der Spacer stets Si-C-gebunden vorliegt. Der Spacer ist dabei ein zweiwertiger Kohlenwasserstoffrest, der 1 bis 30 Kohlenstoffatome umfasst und in dem nicht benachbarte Kohlenstoffatome durch Sauerstoffatome ersetzt sein können und der auch andere Heteroatome oder Heteroatomgruppen enthalten kann, wobei dies nicht bevorzugt ist.

Die bevorzugten funktionellen Gruppen Methacrylat, Acrylat und Epoxy sind vorzugsweise über einen Spacer an das Siliziumatom gebunden, wobei der Spacer aus 3 bis 15 Kohlenstoffatomen, vorzugsweise 3 bis 8 Kohlenstoffatomen, insbesondere 3 Kohlenstoffatomen und ggf. darüber hinaus höchstens ein bis 3 Sauerstoffatomen, vorzugsweise aus höchstens 1 Sauerstoffatom besteht.

Die ebenfalls bevorzugte Carboxylgruppe ist vorzugsweise über einen Spacer an das Siliziumatom gebunden, wobei der Spacer aus 3 bis 30 Kohlenstoffatomen, bevorzugt 3 bis 20 Kohlenstoffatomen, insbesondere 3 bis 15 Kohlenstoffatomen und ggf. darüber hinaus noch aus Heteroatomen, allerdings bevorzugt höchstens ein bis 3 Sauerstoffatomen, vorzugsweise höchstens 1 Sauerstoffatom, vorzugsweise aus keinem Sauerstoffatom besteht. Reste R¹⁷, die Carboxylreste als funktionelle Gruppe tragen, werden durch die allgemeinen Formel (VIII) beschrieben

Y¹ - COOH (VIII),

wobei Y¹ vorzugsweise einen zweiwertigen linearen oder verzweigten Kohlenwasserstoffrest mit bis zu 30 Kohlenstoffatomen bedeutet, wobei Y¹ auch olefinisch ungesättigte Gruppen oder Heteroatome enthalten kann und das vom Rest Y¹ unmittelbar an das Silizium gebundene Atom ein Kohlenstoff ist. Heteroatome enthaltende Fragmente, die in dem Rest Y¹ typischerweise enthalten sein können, sind -N(R⁵)-C(=O)-, -C-O-C-, -N(R⁵)-, -C(=O)-, -O-C(=O)-, -C-S-C-, -O-C(=O)-O-, -N(R⁵)-C(=O)-N(R⁵)-, wobei unsymmetrische Reste in beiden möglichen Richtungen in den Rest Y¹ eingebaut sein können, wobei R⁵ einen Kohlenwasserstoffrest oder Wasserstoff bedeutet.

Wird der Rest gemäß Formel (VIII) z.B. durch Ringöffnung und Kondensation eines Maleinsäureanhydrids an eine Silanolfunktion erzeugt, so würde er einen Rest der Form (cis)-C=C-COOH bedeuten.

Funktionelle Gruppen tragende Reste R¹⁷, die Heteroatome enthalten, sind beispielsweise Carbonsäureesterreste, der allgemeinen Formel (IXa)

Y¹-C(=O)O-Y² (IXa),

wobei Y¹ die oben angegebene Bedeutung hat bzw. in einer weiteren Ausführungsform in der Formel (IXa) gar nicht vorhanden ist. Der Rest Y² bedeutet ganz allgemein einen organischen Rest. Y² kann auch weitere Heteroatome und organische Funktionen enthalten, wie Doppelbindungen oder Sauerstoffatome, wobei dies nicht bevorzugt ist. Bevorzugt sind als Y² Kohlenwasserstoffreste, wie beispielsweise Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Arylreste, wie der Phenyl-, Naphthyl-, Anthryl- und Phenanthrylrest, Alkarylreste, wie Tolylreste, Xylylreste und Ethylphenylreste, und Aralkylreste, wie der Benzylrest und der β-Phenylethylrest. Besonders bevorzugte Kohlenwasserstoffreste Y² sind der Methyl, der n-Propyl, iso-Propyl-, der Phenyl-, der n-Octyl- und der iso-Octylrest.

R¹⁷ kann als funktionelle Gruppe auch einen umgekehrt gebundenen Carbonsäureesterrest tragen, also ein Rest der Form (IXb)

Y¹-OC(=O)Y² sein (IXb),

wobei Y¹ und Y² dieselbe Bedeutung wie unter Formel (IXa) haben.

Funktionelle Gruppen tragende Reste R¹⁷ können auch Carbonsäureanhydridreste der allgemeinen Formeln (X) oder (XI) sein

Y¹ - C-C(=O)-O-C(=O) (X),

Y¹ - R¹⁴C-C(=O)-O-C(=O)R¹⁵ (XI),

wobei Y¹ die oben angegebene Bedeutung hat und R¹⁴ und R¹⁵ unabhängig voneinander jeweils einen C1 - C8 Kohlenwasserstoffrest bedeuten, der gegebenenfalls Heteroatome enthalten kann, wobei dies nicht bevorzugt ist.

Weitere Beispiele für funktionelle Gruppen tragende Reste R¹⁷ sind Phosphonsäurereste und Phosphonsäureesterreste der allgemeinen Formel (XII)

Y¹-P(=O)(OR¹⁶)₂ (XII),

wobei Y¹ die oben angegebene Bedeutung hat, die Reste R¹⁶ vorzugsweise unabhängig voneinander Wasserstoff- oder Kohlenwasserstoffreste mit bis zu 18 Kohlenstoffatomen bedeuten. Bevorzugte Phosphonsäurereste sind solche, bei denen R¹⁶ Wasserstoff, Methyl oder Ethyl bedeutet, wobei diese Aufzählung nicht limitierend zu verstehen ist.

Beispiele für weitere funktionelle Gruppen tragende Reste R¹⁷ sind Acryloxy- bzw. Methacryloxyreste der Methacrylsäureester oder Acrylsäureester wie Methylacrylat, Methylmethacrylat, Ethylacrylat, Ethylmethacrylat, Propylacrylat, Propylmethacrylat, n-Butylacrylat, n-Butylmethacrylat, iso-Butylacrylat, iso-Butylmethacrylat, t-Butylacrylat, t-Butylmethacrylat, 2-Ethylhexylacrylat und Norbornylacrylat. Besonders bevorzugt sind Methylacrylat, Methylmethacrylat, n-Butylacrylat, iso-Butylacrylat, t-Butylacrylat, 2-Ethylhexylacrylat und Norbornylacrylat.

Weitere Beispiele für funktionelle Gruppen tragende Reste R¹⁷ sind die bevorzugten olefinisch ungesättigten Kohlenwasserstoffreste R¹⁷ der Formel (XIII) und (XIV)

Y¹-CR⁷=CR⁸R⁹ (XIII)

Y¹-C≡CR¹⁰ (XIV),

wobei Y¹ die oben angegebene Bedeutung hat bzw. in einer weiteren Ausführungsform in den Formeln (XIII) und (XIV) gar nicht vorhanden ist, und die Reste R⁷, R⁸, R⁹ und R¹⁰ unabhängig voneinander ein Wasserstoffatom oder einen C1 - C8 Kohlenwasserstoffrest bedeuten, der ggf. Heteroatome enthalten kann, wobei das Wasserstoffatom der bevorzugteste Rest ist. Besonders bevorzugte Reste (XIII) sind der Vinylrest, der Propenylrest und der Butenylrest, insbesondere der Vinylrest. Der Rest (XIII) kann auch einen über einen Spacer gebundenen Dienylrest bedeuten, wie den über einen Spacer gebundenen 1,3 Butadienyl- oder den Isoprenylrest.

Weitere Beispiele für funktionelle Gruppen tragende Reste R¹⁷ sind solche mit Epoxy-Gruppen der Formeln (XV) und (XVI), 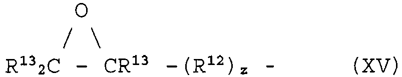 oder 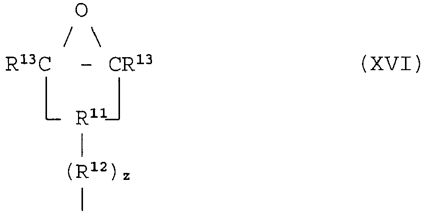 wobei
R¹² ein zweiwertiger Kohlenwasserstoffrest mit 1 bis 10 Kohlenstoffatomen je Rest ist, der durch ein Ethersauerstoffatom unterbrochen sein kann,
R¹³ ein Wasserstoffatom oder ein einwertiger Kohlenwasserstoffrest mit 1 bis 10 Kohlenstoffatomen je Rest ist, der durch ein Ethersauerstoffatom unterbrochen sein kann, R¹¹ ein dreiwertiger Kohlenwasserstoffrest mit 3 bis 12 Kohlenstoffatomen je Rest ist und
z 0 oder 1 ist.

Geeignete Beispiele für solche Epoxy-funktionellen Reste R¹⁷ sind
3-Glycidoxypropyl-,
3,4-Epoxycyclohexylethyl-,
2-(3,4-Epoxy-4-methylcyclohexyl)-2-methylethyl-,
3,4-Epoxybutyl-,
5,6-Epoxyhexyl-,
7,8-Epoxydecyl-,
11,12-Epoxydodecyl- und
13,14-Epöxytetradecyl-rest.

Bevorzugte Epoxy-Reste R¹⁷ sind der 3-Glycidoxypropyl-Rest und der 3,4-Epoxycyclohexylethyl-Rest.

Weitere Beispiele für funktionelle Gruppen tragende Reste R¹⁷ sind solche mit Amino-Gruppen der allgemeinen Formel (XVIII)

-R²⁰-[NR²¹-R²²-]ₙNR²¹₂ (XVIII),

wobei R²⁰ ein zweiwertiger linearer oder verzweigter Kohlenwasserstoffrest mit 3 bis 18 Kohlenstoffatomen, vorzugsweise ein Alkylenrest mit 3 bis 10 Kohlenstoffatomen, bedeutet,
R²¹ ein Wasserstoffatom, einen Alkylrest mit 1 bis 8 Kohlenstoffatomen oder einen Acylrest wie Acetylrest bedeutet, vorzugsweise ein Wasserstoffatom ist,
R²² ein zweiwertiger Kohlenwasserstoffrest mit 1 bis 6 Kohlenstoffatomen, vorzugsweise ein Alkylenrest mit 1 bis 6 Kohlenstoffatomen, bedeutet,
n 0, 1, 2, 3 oder 4, vorzugsweise 0 oder 1 ist.

Besonders bevorzugte funktionelle Gruppen tragende Reste R¹⁷ sind carbonsäurefunktionelle, aminofunktionelle und epoxyfunktionelle Reste. Insbesondere bevorzugt sind aminofunktionelle und epoxyfunktionelle Reste.

Grundsätzlich können die Siliconharze (B) verschiedene funktionelle Gruppen tragen. Allerdings ist dies nur möglich, wenn die gewählten Gruppen nicht miteinander unter den Bedingungen der regulären Lagerung reagieren, d.h. eine Aufbewahrung für 6 Monate bei 23°C, 1013 mbar im luft- und feuchtigkeitsdicht verschlossenen Gebinden. Beispielsweise sind Kombinationen von Vinylgruppen und Si-H-Gruppen möglich, da diese zu ihrer Reaktion miteinander deutlich andere Bedingungen als die der regulären Lagerung benötigen, beispielsweise einen Katalysator und erhöhte Temperatur. Eine geeignete Auswahl von Kombinationen funktioneller Gruppen kann sich der Fachmann einfach aus der veröffentlichen Literatur zur chemischen Reaktivität (organo-)funktioneller Gruppen herleiten.

Sind mehrere Reste R¹⁷ mit funktionellen Gruppen in einer Einheit der Formel (VII) vorhanden, können diese unabhängig voneinander für verschiedene Reste innerhalb der angegebenen Gruppe von möglichen Resten stehen, wobei die vorgenannten Bedingungen für die funktionellen Gruppen beachtet werden müssen.

**Ein weiterer Gegenstand der vorliegenden Erfindung ist das Verfahren zur Herstellung der Reaktivharzzusammensetzung.**
Dies erfolgt in einer Ausführungsform durch Dispergieren von (B) in bei 20°C fließfähiges (A) bzw. in (A), welches durch vorheriges Erhitzen auf bis 250°C fließfähig gemacht wurde, bzw. in (A), welches in einem geeigneten Lösungsmittel gelöst wurde, um es fließfähig zu machen. Dem Fachmann ist bekannt, auf welchem Weg (A) in fließfähige Form überführt werden kann, ohne die Härtung anzustoßen. Wenn ein Lösungsmittel eingesetzt wurde, kann dies danach eingedampft werden. Geeignete Lösungsmittel sind dem Fachmann bekannt und werden in Abhängigkeit des Reaktivharzes (A) ausgewählt. Beim Phenolharz sind geeignete Lösungsmittel beispielsweise Ethylacetat und Aceton. Welche Lösungsmittel für welche Reaktivharze geeignet sind, wird beispielsweise in folgendem Lehrbuch beschrieben: Polymer Handbook, Volume 2, 4th Ed.; J. Brandrup, E. H. Immergut, E. A. Grulke; John Wiley & Sons, Inc., 1999 (ISBN 0-471-48172-6).
Geeignete Mischer sind beispielsweise Laborrührer, Plantetenmischer, oder Dissolver, oder Rotor-Stator-Systeme, oder auch Extruder, Walzen, 3-Walzen-Stuhl, etc.

"Fließfähig" im Zusammenhang mit (A) und der Reaktivharzzusammensetzung bedeutet, dass diese in einem physikalischen Aggregatzustand sind, der eine Verteilung auf der Oberfläche des Stützmittels ermöglicht (durch vorheriges Erhitzen auf bis 250°C fließfähig gemacht bzw. in einem geeigneten Lösungsmittel gelöst).

(B) kann sich beim Dispergieren ganz oder teilweise in (A) lösen. Nicht gelöste Anteile liegen als zweite Phase in (A) dispergiert vor. Die mittlere Größe dieser Domänen ist vorzugsweise kleiner 50 µm, bevorzugt kleiner 20 µm, besonders bevorzugt kleiner 10 µm.

**Ein weiterer Gegenstand** der vorliegenden Erfindung ist die **Verwendung der erfindungsgemäßen Reaktivharzzusammensetzung** für Beschichtungen und zur Herstellung von Formteilen, Werkstücken und Schäumen. Insbesondere wird die erfindungsgemäße Reaktivharzzusammensetzung zur Beschichtung von Stützmitteln verwendet.

**Ein weiterer Gegenstand** der vorliegenden Erfindung ist das **Verfahren zur Herstellung von erfindungsgemäß beschichteten Stützmitteln.**

Dem Fachmann sind diverse Möglichkeiten zur Beschichtung von Stützmitteln mit Harzen aus dem Stand der Technik bekannt. Diese Verfahren können auch für die Beschichtung von Stützmitteln mit den vorliegenden erfindungsgemäßen Reaktivharzzusammensetzungen eingesetzt werden.

Um die vorteilige Wirkung der Beschichtung maximal auszunutzen, ist es wichtig, eine besonders gute Dispergierung von (A) mit (B) zu gewährleisten. In der dafür bevorzugten Ausführungsform wird die erfindungsgemäße Reaktivharzzusammensetzung in fließfähiger Form - also bereits bei 20°C fließfähig oder durch Erhitzen bis 250°C aufgeschmolzen und daher fließfähig oder in einem geeigneten Lösungsmittel gelöst und daher fließfähig - zusammen mit oder ohne mindestens einem Härter (C) und mit oder ohne mindestens einem Additiv (D) auf das Stützmittel aufgebracht, beispielsweise durch Sprühen oder Mischen, und anschließend ausgehärtet.

Geeignete Lösungsmittel werden bereits weiter oben beschrieben.

In einer besonders bevorzugten Ausführungsform wird die erfindungsgemäße Reaktivharzzusammensetzung durch Erhitzen bis 250°C aufgeschmolzen und daher fließfähig zusammen mit oder ohne mindestens einem Härter (C) und mit oder ohne mindestens einem Additiv (D) auf das Stützmittel aufgebracht, beispielsweise durch Sprühen oder Mischen, und anschließend ausgehärtet.

Für die Lösungsmittel gilt das weiter oben gesagte.

Wiegen dagegen ökonomische Vorteile schwerer bzw. ist eine maximale Flexibilität beim Herstellverfahren der beschichteten Stützmittel vorteilhaft, dann kommt das folgende alternative Herstellverfahren zum Einsatz. Man kann den ersten Teilschritt auch als in-situ-Verfahren für die Herstellung der erfindungsgemäßen Reaktivharzzusammensetzung bezeichnen, da es in Anwesenheit des Stützmittels erfolgt. In diesem Herstellverfahren wird (B) zusammen mit bei 20°C fließfähigen (A) bzw. mit (A), welches durch vorheriges Erhitzen auf bis 250°C fließfähig gemacht wurde, bzw. mit (A), welches in einem geeigneten Lösungsmittel gelöst wurde, und dem Stützmittel und optional Zugabe von Härter (C) und optional weiteren Additiven (D) gemischt und gehärtet. Die Reihenfolge der Zugabe der Komponenten (A), (B), (C) und (D) ist dabei variabel, mit der Maßgabe, dass die Komponente (B) eingemischt wird, bevor eine substantielle Härtung des Reaktivharzes eintritt. Dies hat den Vorteil, dass eine kurzfristige Anpassung der Verhältnisse von (A) zu (B) in einfacher und unkomplizierter Weise jederzeit erfolgen kann.
Dieses Verfahren zur Herstellung von beschichteten Stützmitteln ist also dadurch gekennzeichnet, dass
i) eine in situ-Herstellung der Reaktivharzzusammensetzung durch Mischen mindestens eines (B) mit mindestens einem bei 20°C fließfähigen (A) bzw. mit (A), welches durch vorheriges Erhitzen auf bis 250°C fließfähig gemacht wurde, bzw. mit (A), welches in einem geeigneten Lösungsmittel gelöst wurde, und mindestens einem Stützmittel und mit oder ohne mindestens einem Härter (C) und mit oder ohne mindestens einem Additiv (D) erfolgt, und
ii) erst danach die Aushärtung erfolgt.

In einem weiteren alternativen Herstellverfahren für erfindungsgemäß beschichtete Stützmittel wird (A) mit einem geeigneten Lösemittel, Stützmittel und (B) gemischt. Der Mischung kann optional Härter (C) und evtl. verschiedene Additive (D) zugegeben werden. Anschließend wird das Lösungsmittel abgedampft und die so beschichteten Sützmittel werden gehärtet. Die Reihenfolge der Zugabe der Komponenten (A), (B), (C) und (D) ist variabel.

In einer besonders bevorzugten möglichen Ausführungsform wird ein geeignetes Stützmittel wie beispielsweise Sand auf ca. 170 - 260 °C vorgeheizt. In einem Mischer werden dann die erfindungsgemäße Reaktivharzzusammensetzung, ein geeigneter Härter (C) und optional verschiedene Additive (D) zugegeben.

Bei einer anderen Alternative wird ein geeignetes Stützmittel wie beispielsweise Sand auf ca. 170 - 260 °C vorgeheizt. In einem Mischer werden dann (A), (B), ein geeigneter Härter (C) und optional verschiedene Additive (D) zugegeben.

Die Erzeugung von Schichten ist wie folgt zu verstehen: Mehrere Schichten werden in mehreren aufeinanderfolgenden Beschichtungs- und Härtungszyklen erzeugt. D.h., dass nach dem Benetzen der Oberfläche des Stützmittels mit der erfindungsgemäßen Reaktivharzzusammensetzung diese Schicht zunächst teilweise oder vollständig gehärtet wird. Anschließend wird eine neue Schicht der erfindungsgemäßen Reaktivharzzusammensetzung aufgebracht und erneut teilweise oder vollständig gehärtet.

Dem gegenüber steht das Aufbringen der erfindungsgemäßen Reaktivharzzusammensetzung portionsweise in mehreren Schritten ohne eine substanzielle Zwischenhärtung der einzelnen Portionen, und erst am Schluss erfolgt eine teilweise oder vollständige Härtung. Dies führt somit nur zu einer einzelnen Schicht.

### Stützmittel

Geeignete Stützmittel sind dem Fachmann aus dem Stand der Technik seit langem bekannt und können für die erfindungsgemäße Beschichtung eingesetzt werden. Stützmittel sind üblicherweise harte, hochfeste Teilchen wie beispielsweise Sand oder Kies aus Gesteinen wie Kalkstein, Marmor, Dolomit, Granit usw., aber auch Glasperlen, Keramikpartikel, Keramikkugeln und dergleichen, wobei diese Liste beispielhaft und nicht beschränkend ist. Bevorzugt zeigen die Stützmittelpartikel eine im Wesentlichen sphärische, also kugelförmige Form, da diese genügend Zwischenraum lässt, damit das Rohöl bzw. Gas vorbeiströmen kann. Daher werden grobkörniger Sand, Glasperlen und Glashohlkugeln (sogenannte Microballons) als Stützmittel bevorzugt. Besonders bevorzugt wird Sand als Stützmittel verwendet.

Bevorzugt weisen die Stützmittelteilchen eine durchschnittliche Größe von 5.000 bis 50 µm auf, besonders bevorzugt eine durchschnittliche Größe von 1.500 bis 100 µm. Zudem zeigen sie bevorzugt ein Seitenverhältnis von Länge zu Breite von höchstens 2 : 1.

### Härter (C)

Geeignete Härter sind dem Fachmann aus dem Stand der Technik seit langem bekannt und werden entsprechend des verwendeten Reaktivharzes ausgewählt. Ein bevorzugter Härter (C) für Novolake ist Urotropin. (C) und somit auch Urotropin werden typischerweise in Mengen zwischen 8 und 20 Gew.-% bezogen auf die Menge an erfindungsgemäßer Reaktivharzzusammensetzung eingesetzt. Vorzugsweise wird Urotopin als wässrige Lösung auf die Schmelze des Reaktivharzes appliziert. Solche Methoden sind dem Fachmann ebenfalls bekannt und beispielsweise in US4732920 beschrieben.

### Additiv (D)

Geeignete Additive (D) sind dem Fachmann aus dem Stand der Technik ebenfalls seit langem bekannt. Nicht abschließende Beispiele sind Anti-Statik-Mittel, Trennmittel, Haftvermittler usw.

Geeignete Stützmittel, Härter (C) und Additive (D) werden beispielsweise in US4732920 und US2007/0036977 A1 beschrieben.

Für eine optimale Performance des erfindungsgemäß beschichteten Stützmittels müssen Typ und Spezifikation des Stützmittels, Typ und Spezifikation des Reaktivharzes (A), Organopolysiloxan (B), Härter (C) und ggf. Additive (D), die Art des Misch- und Beschichtungsprozesses, die Reihenfolge der Zugabe der Komponenten und die Mischzeiten je nach Anforderung der spezifischen Anwendung aufeinander abgestimmt werden. Eine Veränderung des Stützmittels erfordert unter Umständen eine Anpassung des Beschichtungsprozesses und/oder der verwendeten Härter (C) und Additive (D).

**Ein weiterer Gegenstand** sind somit auch die gemäß den oben beschriebenen Verfahren erhältlichen erfindungsgemäß **beschichteten Stützmittel.**

Bei den erfindungsgemäßen Stützmitteln kann die Oberfläche des Stützmittels ganz oder teilweise beschichtet sein. Bevorzugt erscheinen bei der Untersuchung mit dem Rasterelektronenmikroskop mindesten 20% der sichtbaren Oberfläche des Stützmittels mit der erfindungsgemäßen Reaktivharzzusammensetzung beschichtet, besonders bevorzugt mindestens 50%.
Bevorzugt erscheinen bei der Untersuchung mit dem Rasterelektronenmikroskop mindestens 5% der StützmittelTeilchen auf ihrer sichtbaren Seite vollständig umhüllt, besonders bevorzugt mindestens 10%.
Der wesentliche Teil der Beschichtung auf dem erfindungsgemäßen Stützmittel ist 0,1 bis 100 µm dick, bevorzugt 0,1 bis 30 µm, besonders bevorzugt 1 bis 20 µm.

Bevorzugt sind die erfindungsgemäßen Stützmittel mit weniger als drei Schichten der erfindungsgemäßen Reaktivharzzusammensetzung beschichtet, besonders bevorzugt mit nur einer Schicht.

Die erfindungsgemäße Reaktivharzzusammensetzung wird bevorzugt in Mengen von 0,1-20 Gew.-% bezogen auf das Gewicht des Stützmittels eingesetzt, bevorzugt von 0,5-10 Gew.-% und insbesondere bevorzugt von 1-5 Gew.-%.

**Ein weiterer Gegenstand** der vorliegenden Erfindung ist die **Verwendung** der erfindungsgemäß beschichteten **Stützmittel in Fracking-Förderverfahren für Erdöl und Erdgas.**

### Vorteile der Erfindung

Die erfindungsgemäße Reaktivharzzusammensetzung weist verbesserte Verlaufseigenschaften in Beschichtungsprozessen auf. Dadurch werden Oberflächen gleichmäßiger beschichtet. Es können glattere und glänzendere Oberflächen erhalten werden.

Die erfindungsgemäßen Reaktivharzzusammensetzungen zeigen Vorteile bei der Beschichtung von Stützmitteln dadurch, dass der Ausschuss durch Verkleben des Stützmittels merklich reduziert wird.

Die erfindungsgemäße Reaktivharzzusammensetzung weist als gehärtete Beschichtung für Stützmittel eine verbesserte Bruchfestigkeit, Zähigkeit und Elastizität und Verformbarkeit bei gleicher Härte auf. Die Beschichtung hat eine verringerte Neigung zum Brechen und Abplatzen und schützt das Stützmittel wirkungsvoller und dauerhafter vor hohen Drücken und Schlägen. Somit verbessert sich die Beständigkeit des gesamten Stützmittels.
Herkömmliche Stützmittel gemäß dem Stand der Technik sind sehr spröde und haben eine große Neigung zum Brechen. Durch Bruch des Stützmittels werden Feinanteile freigesetzt. Eine Freisetzung der Feinanteile wirkt sich negativ auf die Durchströmrate des Rohöls oder Gases aus, dadurch, dass die Zwischenräume zwischen den Stützmittelkörnern verstopft werden, und somit wird die Öl- bzw. Gasquelle schnell unrentabel. Neue Bohrungen oder Refracking werden erforderlich.

Demgegenüber sind die erfindungsgemäßen beschichteten Stützmittel widerstandsfähiger gegenüber Belastungen, wie Schläge, Verformung oder Druck, und haben somit eine geringere Neigung zum Brechen.

Ein weiterer Vorteil der erfindungsgemäßen Beschichtung liegt in Ihrer Verformbarkeit, sodass diese häufig beim Bruch der spröden Stützmittel-Körner selbst nicht bricht und somit die entstehenden Feinanteile wie eine plastischen Hülle umschließt oder zusammenhält und damit insgesamt deren Freisetzung reduziert wird.

Durch diese vorteilhaften Eigenschaften der erfindungsgemäß beschichteten Stützmittel kann der Öl- bzw. Gasfluss länger aufrechterhalten werden. Daraus ergeben sich entscheidende wirtschaftliche und ökologische Vorteile.

### Beispiele

Die nachfolgenden Beispiele erläutern die Erfindung, ohne dabei beschränkend zu wirken. In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000hPa, und bei Raumtemperatur, also bei 25°C, bzw. bei einer Temperatur, die sich beim Zusammengeben der Reaktanden bei Raumtemperatur ohne zusätzliche Heizung oder Kühlung einstellt, durchgeführt. Im Folgenden beziehen sich alle Viskositätsangaben auf eine Temperatur von 25°C.

### Verwendete Abkürzungen:

Die Bedeutung der weiter oben verwendeten Abkürzungen gilt auch für die Beispiele:
- PTFE: = Polytetrafluoräthylen
- UpM: = Umdrehungen pro Minute

### Molekulargewichtsverteilungen:

Molekulargewichtsverteilungen werden als Gewichtsmittel Mw und als Zahlenmittel Mn bestimmt, wobei die Methode der Gelpermeationschromatographie (GPC bzw. Size Exclusion Chromatographie (SEC)) Anwendung findet mit Polystyrol Standard und Brechnungsindexdetektor (RI-Detektor). Wo nicht anders ausgewiesen, wird THF als Eluent verwendet und DIN 55672-1 angewendet. Die Polydispersität ist der Quotient Mw/Mn.

### Beispiel 1

Ein Glaskolben wurde mit Stickstoff gespült, mit 475 g Novolak "Resin 14772" (Plastics Engineering Company, Sheboygan, USA) gefüllt und nochmals mit Stickstoff gespült. Die Masse wurde bei 120 °C geschmolzen. Dann wurde ein Rührer mit 420 UpM zugeschaltet. 25 g Siliconharz 1 der Zusammensetzung [PhSiO_{3/2}]_{7,35}[(3-Glycidoxypropyl)SiO_{3/2}]_{4,20} [Me₂SiO_{2/2}]_{3,45} [MeO_{1/2}]_{6,68} [BuO_{1/2}]_{0,64} (Molekulargewicht laut SEC (Eluent THF) : Mw = 2100 g/mol; Mn = 1300 g/mol; Viskosität 90-135 cSt; Epoxyäuquivalentgewicht 660 - 680 g/mol; Epoxidzahl 1,85 mmol/g) wurden zugegeben und bei 420 UPM 10 Minuten gerührt. Die flüssige Masse wird heiß auf eine PTFE-Folie gegossen und mechanisch zerkleinert und somit ein Granulat hergestellt.

### Beispiel 2

Nach dem Verfahren von Beispiel 1 wurden 25 g Siliconharz 2 der Zusammensetzung [PhSiO_{3/2}]_{7,30} [(2-Amino-ethyl)-3-aminopropyl-SiO_{3/2}]_{2,62} [Me₂SiO_{2/2}]_{3,86} [MeO_{1/2}]_{5,88} [BuO_{1/2}]_{0,57} (Molekulargewicht laut SEC (Eluent THF/Essigsäureanhydrid): Mw = 1800 g/mol; Mn = 1200 g/mol; Viskosität (kinematisch, 25 °C) 120 mm²/s; Aminzahl 2,6-2,9 mmol/g) anstatt Siliconharz 1 eingearbeitet und ein Granulat erzeugt.

### Beispiel 3

Nach dem Verfahren von Beispiel 1 wurden 25 g Siliconharz 3 der Zusammensetzung [PhSiO_{3/2}]_{9,44} [MeSiO_{3/2}]_{5,67} [Me₂SiO_{2/2}]_{0,63} [MeO_{1/2}]_{6,77} (Molekulargewicht laut SEC (Eluent THF): Mw = 1800 g/mol; Mn = 900 g/mol; Viskosität (kinematisch, 25 °C) 280 mm²/s) anstatt Siliconharz 1 eingearbeitet und ein Granulat erzeugt.

### Beispiel 4

Nach dem Verfahren von Beispiel 1 wurden 25 g Siliconharz 4 der Zusammensetzung [MeSiO₃/₂]_{23,14} [EtO_{1/2}]_{27,28} (Molekulargewicht laut SEC (Eluent Toluol): Mw = 2560 g/mol; Mn = 900 g/mol; Viskosität (dynamisch, 25 °C) 25 mPa.s) anstatt Siliconharz 1 eingearbeitet und ein Granulat erzeugt.

### Vergleichsbeispiel 1 (V1)

Nach dem Verfahren von Beispiel 1 wurden 25 g Siliconharz 5 der Zusammensetzung [Me₃SiO_{1/2}]_{26,65} [ViMe₂SiO_{1/2}]_{3,72} [SiO_{4/2}]_{42,78} [HO_{1/2}]_{1,02} [EtO_{1/2}]_{5,93} (Molekulargewicht laut SEC (Eluent Toluol) : Mw = 5300 g/mol; Mn = 2560 g/mol) anstatt Siliconharz 1 eingearbeitet und ein Granulat erzeugt.

### Vergleichsbeispiel 2 (V2)

Ein Glaskolben wurde mit Stickstoff gespült, mit 475 g Novolak "Resin 14772" (Plastics Engineering Company, Sheboygan, USA) gefüllt und nochmals mit Stickstoff gespült. Die Masse wurde bei 120 °C geschmolzen. Dann wurde ein Rührer mit 420 UpM zugeschaltet. 25 g Siliconharz 3 der Zusammensetzung [PhSiO_{3/2}]_{9,44} [MeSiO_{3/2}]_{5,67} [Me₂SiO_{2/2}]_{0,63} [MeO_{1/2}]_{6,77} (Molekulargewicht laut SEC (Eluent THF): Mw = 1800 g/mol; Mn = 900 g/mol; Viskosität (kinematisch, 25 °C) 280 mm²/s) und 5 g Oxalsäure wurden zugegeben und bei 420 UpM zunächst 1 h bei 130 °C unter Rückfluss gerührt. Dann wurde innerhalb von 2 h auf 180 °C erhitzt und dabei auftretendes Kondensat abgeführt. Anschließend wurden weitere 30 min bei 180 °C destilliert. Die flüssige Masse wurde heiß auf eine PTFE-Folie gegossen und mechanisch zerkleinert und somit ein Granulat hergestellt.

In den erfindungsgemäßen Beispielen 1 - 4 und im nicht-erfindungsgemäßen Vergleichsbeispiel V1 wurde kein Katalysator beim Mischen des Siliconharzes (B) und des Reaktivharzes (A) zugegeben. Es entsteht eine physikalische Mischung. Im nicht-erfindungsgemäßen Vergleichsbeispiel V2 wurde ein Katalysator zugegeben und bei erhöhter Temperatur und verlängerter Zeit reagiert. Es entsteht ein Hybridmaterial durch chemische Reaktion von Novolak und Siliconharz. Im Vergleichsbeispiel V2 wurde ein Siliconharz verwendet, welches D-Gruppen der Formel [Me₂SiO_{2/2}] enthält, wie in US20140124200A offenbart.

Unerwartet zeigt sich, dass sich die erfindungsgemäßen Siliconharze (B) gleichmäßig und fein im Reaktivharz verteilen. Sofern eine zweite Phase ausgebildet wird, liegt diese im Wesentlichen in Form sphärischer Tröpfchen vor. Dagegen ist das feste, nicht-erfindungsgemäße Polysiloxan aus Vergleichsbeispiel V1 nicht fein dispergierbar und bildet ungleichmäßige Brocken und Splitter im Phenolharz, die teilweise über 100 µm groß sind.

### Vergleichsbeispiel 3 (V3)

Als Vergleichsbeispiel V3 dient nicht-modifiziertes Novolak "Resin 14772" (Plastics Engineering Company, Sheboygan, USA).

### Beispiel 6

### Herstellung von Reaktivharz-Lösungen zur Herstellung von Prüfkörpern und Beschichtung von Q-PANEL-Prüfblechen:

Es wurden jeweils 10 Teile der erfindungsgemäßen, modifizierten Phenolharze aus Beispiel 3 bzw. 10 Teile des nicht-erfindungsgemäßen, modifizierten Phenolharzes aus dem Vergleichsbeispiel V2 bzw. 10 Teile des reinen, nicht-erfindungsgemäßen, nicht-modifizierten Phenolharzes Resin 14772 (Plastics Engineering Company, Sheboygan, USA) mit jeweils 1 Teil Urotropin und 10,0 Teile Ethylacetat (Fa. Bernd Kraft, ≥ 99 %) durch Schütteln über Nacht gelöst.

### Beispiel 7

### Herstellung von mit Phenolharz beschichteten Q-PANEL-Prüfblechen:

Für die Versuche zur Sprödigkeitsbestimmung wurden Q-PANEL-Prüfbleche auf der gebürsteten Seite 3 x mit Aceton gereinigt und dann 1 h im Abzug abgelüftet. Anschließend wurden auf jedes Blech jeweils 3 mL der entsprechenden Phenolharzlösung aus Beilspiel 6 gegeben und mit einem 100 µm-Rakel aufgestrichen, und anschließend wurde das Lösemittel im Abzug über Nacht abgedampft.

Zur Härtung wurden die Proben in einen kalten Trockenschrank gelegt, innerhalb von 3 Stunden unter Spülung mit Stickstoff auf 160 °C aufgeheizt, 2 h bei dieser Temperatur gehalten und über Nacht auf 23 °C abgekühlt.

Nach dem Abdampfen des Lösungsmittels entsteht eine ca. 50 µm dicke gehärtete Harzschicht auf dem Blech.

### Beispiel 8

### Prüfung der Widerstandsfähigkeit:

Mittels Kugelschlag-Prüfer kann die Beständigkeit der Beschichtung in isolierter Form betrachtet werden. Man erhält eine Aussage zur Elastizität, Schlagzähigkeit und Bruchfestigkeit einer Beschichtung.

Zum Nachweis der verbesserten Eigenschaften, also der Zähigkeit und Widerstandsfähigkeit gegen Schläge und Drücke, wurde nach Beispiel 6 und 7 eine jeweils ca. 50 µm dicke, gehärtete Schicht des erfindungsgemäßen Harzes aus dem Beispiel 3 auf einem Q-PANEL-Prüfblech hergestellt, bzw. als Vergleichsbeispiele eine ca. 50 µm dicke, gehärtete Schicht des nicht-modifiziertes Harz Resin 14772 (Plastics Engineering Company, Sheboygan, USA) und des nicht-erfindungsgemäßen Harzes aus dem Vergleichsbeispiel V2. Die beschichteten Bleche wurden an einem Erichsen Kugelschlagprüfgerät, Modell 304-ASTM, geprüft und die Ergebnisse durch einen geschulten Prüfer visuell ausgewertet: Dazu wird aus definierter, variabler Fallhöhe eine Kugel auf die Rückseite des Blechs fallen gelassen (jeweils Doppelversuche an unterschiedlicher Stelle). Die Schlagenergie ergibt sich aus der Fallhöhe multipliziert mit Fallgewicht, angegeben in inch (in) x pounds (lbs). Die Schlagenergie wird wie folgt verändert: 5, 10, 15, 20, 25, 30, 35, 40 (in x lbs). Die gebeulten Schlagstellen werden visuell auf Sprünge und Risse untersucht und relativ zur Referenz bewertet.

Tabelle 1 zeigt die Bewertung der Harz-Beschichtung auf Q-PANEL-Prüfblechen und deren Widerstandsfähigkeit mittels Kugelschlagprüfgerät.

**Tabelle 1**

| Harz aus Beispiel | Siloxan-Additiv | Impact Test | Beschreibung |
|---|---|---|---|
| 3 | Siliconharz 3 | ++ | Rissbildung ab 35 inch x lbs; Abplatzungen ab 40 inch x lbs |
| V2 | Siliconharz 3 | + | Rissbildung ab 10 inch x lbs; Abplatzungen ab 25 inch x lbs |
| V3 | kein Additiv | 0 | Rissbildung ab 5 in x lbs |

Dabei sind die Werte wie folgt zu verstehen:
"0" bedeutet Rissbild ähnlich der Referenz. Die Referenz zeigt bereits bei niedrigster Energie, ab 5 inch x lbs, deutliche Rissbildung. Das Ausmaß der Rissbildung ist ähnlich der Referenz.
"+" bedeutet Rissbild besser als bei der Referenz, d.h. deutliche Risse sind erst bei einer höheren Energie im Bereich 10 - 30 inch x lbs zu erkennen, oder das Ausmaß der Rissbildung ist insgesamt deutlich reduziert im Vergleich zur Referenz.
"++" bedeutet, dass bis zu einer Energie von 30 inch x lbs keine Risse zu erkennen sind.

Völlig überraschend weist die erfindungsgemäße, gehärtete Beschichtung mit Beispiel 3 eine wesentlich verbesserte Elastizität, Schlagzähigkeit und Bruchfestigkeit im Vergleich zum nicht-modifiziertem Vergleichsbeispiel V3 und zum aufwändig herzustellenden Hybridmaterial aus dem nicht-erfindungsgemäßen Vergleichsbeispiel V2 auf, welches das gleiche Siliconharz enthält.

### Beispiel 9

### Herstellung von beschichteten Stützmittel:

20 - 40 mesh Fracking-Sand wurden mit 3,5% der erfindungsgemäßen Harze aus den Beispielen 1 und 2, bzw. als Vergleichsbeispiele mit 3,5% des nicht-modifizierten Harzes Resin 14772 (Plastics Engineering Company, Sheboygan, USA) und des nicht-erfindungsgemäßen Harzes aus dem Vergleichsbeispiel V1 im Schmelzverfahren beschichtet und mit 10 Gew.-% Urotropin, bezogen auf die Menge an Harz, gehärtet.

### Beispiel 10

### Untersuchung der Druckstabilität von beschichteten Stützmitteln:

Die Druckstabilität der beschichteten Stützmittel gemäß Beispiel 8 wurde nach DIN EN ISO 13503-2 bei 14000 PSI und 18000 PSI Druck untersucht. Das Ergebnis ist in Tabelle 2 aufgezeigt.

**Tabelle 2**

| Fracking-Sand beschichtet mit Harz aus Beispiel | Menge gebildeter Feinanteil relativ zum nicht-modifiziert beschichteten Stützmittel mit Harz aus Vergleichsbeispiel V3 (%) | |
|---|---|---|
| | bei 14000 PSI | bei 18000 PSI |
| 1 | 82 | 87 |
| 2 | 82 | 81 |
| V1 | 98 | 104 |
| V3 | 100 | 100 |

Es zeigt sich völlig überraschend, dass bei den erfindungsgemäß-beschichteten Stützmitteln etwa 15 bis 20% weniger Feinanteil gebildet wird, im Vergleich zum nicht-modifiziert beschichteten Stützmittel und zum nichterfindungsgemäß-beschichteten Harz aus dem Vergleichsbeispiel V1. Die Verbesserung der Druckbeständigkeit der erfindungsgemäß beschichteten Stützmittel war vollkommen unerwartet, denn eine Verbesserung der Bruch- und Schlagzähigkeit der erfindungsgemäß modifizierten Reaktivharze erlaubte keinen grundsätzlichen Rückschluss, dass dies automatisch auch zu einer Verbesserung der Druckbeständigkeit führt.

## Patentansprüche

1. Reaktivharzzusammensetzungen enthaltend
- (A) 92 - 99,5 Gew.% mindestens eines Reaktivharzes, und
- (B) 0,5 - 8 Gew.% mindestens eines Siliconharzes, aus Einheiten der Formeln (Ia), (Ib), (VII) und (Id) 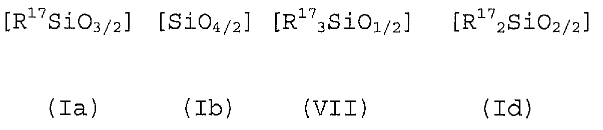 wobei
R¹⁷ gleiche oder unabhängig voneinander verschiedene einwertige, substituierte oder nicht substituierte organische Reste, die funktionelle Gruppen tragen oder nicht tragen, einen -OH oder einen Wasserstoffrest bedeutet,
mit den Maßgaben, dass
- in (B) mindestens 20 mol% der Formel (Ia) oder (Ib) oder einer Mischung aus beiden enthalten sind,
- in (B) höchstens 50 mol% der Formel (Ib) enthalten sind,
- Alkoxygruppen als R¹⁷ zu mindestens 5 Gew.% in (B) enthalten sind.

2. Reaktivharzzusammensetzung nach Anspruch 1, **dadurch gekennzeichnet, dass** (B) mindestens 8,5 Gew.% Alkoxygruppen enthält.

3. Reaktivharzzusammensetzung nach Anspruch 1 oder 2, **dadurch gekennzeichnet, dass** mindestens 10 mol% aller Reste R¹⁷ unabhängig voneinander gleiche oder verschiedene einwertige, substituierte oder nicht substituierte organische Reste mit mind. 3 C-Atomen sind.

4. Reaktivharzzusammensetzung nach Anspruch 1 oder 2, **dadurch gekennzeichnet, dass** mindestens 1 mol% aller Reste R¹⁷ unabhängig voneinander ausgewählt wird aus organofunktionellen Resten oder siliziumgebundenem Wasserstoff.

5. Reaktivharzzusammensetzung nach Anspruch 3, **dadurch gekennzeichnet, dass** gleichzeitig als weitere Reste R¹⁷ noch mindestens 1 mol-% unabhängig voneinander ausgewählt wird aus organofunktionellen Resten oder siliziumgebundenem Wasserstoff.

6. Verfahren zur Herstellung der Reaktivharzzusammensetzung nach einem der Ansprüche 1 bis 5, durch Dispergieren von (B) in (A), mit der Maßgabe, dass (A) bei 20°C bereits fließfähig ist, (A) durch vorheriges Erhitzen auf bis 250°C fließfähig gemacht wurde oder (A) durch vorheriges Lösen in einem geeigneten Lösungsmittel gelöst wurde, um es fließfähig zu machen.

7. Verwendung der Reaktivharzzusammensetzung nach einem der Ansprüche 1 bis 5, für Beschichtungen und zur Herstellung von Formteilen, Werkstücken und Schäumen.

8. Verwendung der Reaktivharzzusammensetzung nach einem der Ansprüche 1 bis 5, zur Beschichtung von Stützmitteln.

9. Verfahren zur Herstellung von beschichteten Stützmitteln, **dadurch gekennzeichnet, dass** die Reaktivharzzusammensetzung gemäß einem der Ansprüche 1 bis 5 in fließfähiger Form - also bereits bei 20°C fließfähig oder durch Erhitzen bis 250°C aufgeschmolzen und daher fließfähig oder in einem geeigneten Lösungsmittel gelöst und daher fließfähig - zusammen mit oder ohne mindestens einem Härter (C) und mit oder ohne mindestens einem Additiv (D) auf das Stützmittel aufgebracht und anschließend ausgehärtet wird.

10. Verfahren zur Herstellung von beschichteten Stützmitteln, **dadurch gekennzeichnet, dass**
i) die Herstellung der Reaktivharzzusammensetzung als in-situ-Verfahren in Anwesenheit des Stützmittels erfolgt, wobei mindestens ein (B) und
mindestens ein bei 20°C fließfähiges (A) bzw. mit (A), welches durch vorheriges Erhitzen auf bis 250°C fließfähig gemacht wurde, bzw. mit (A) welches in einem geeigneten Lösungsmittel gelöst wurde, und
mindestens ein Stützmittel
mit oder ohne mindestens einem Härter (C)
mit oder ohne mindestens einem Additiv (D)
gemischt werden,
ii) und erst danach die Aushärtung erfolgt.

11. Beschichtete Stützmittel, erhältlich nach dem Verfahren gemäß Anspruch 9 oder 10.

12. Verwendung der beschichteten Stützmittel nach Anspruch 10 in Fracking-Förderverfahren für Erdöl und Erdgas.

## Claims

1. Reactive resin compositions comprising
- (A) 92%-99.5% by weight of at least one reactive resin, and
- (B) 0.5%-8% by weight of at least one silicone resin,
composed of units of the formulae (Ia), (Ib), (VII) and (Id) 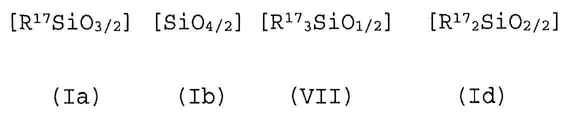 where
R¹⁷ is identical or independently different monovalent substituted or unsubstituted organic radicals that bear or do not bear functional groups, an -OH or a hydrogen radical,
with the conditions that
- in (B) at least 20 mol% of the formula (Ia) or (Ib) or of a mixture of the two is present,
- in (B) at most 50 mol% of the formula (Ib) is present,
- alkoxy groups are present in (B) as R¹⁷ to an extent of at least 5% by weight.

2. Reactive resin composition according to Claim 1, **characterized in that** (B) comprises at least 8.5% by weight of alkoxy groups.

3. Reactive resin composition according to Claim 1 or 2, **characterized in that** at least 10 mol% of all R¹⁷ radicals are independently identical or different monovalent substituted or unsubstituted organic radicals having at least 3 carbon atoms.

4. Reactive resin composition according to Claim 1 or 2, **characterized in that** at least 1 mol% of all R¹⁷ radicals are independently selected from organofunctional radicals and silicon-bonded hydrogen.

5. Reactive resin composition according to Claim 3, **characterized in that**, at the same time, as further R¹⁷ radicals, another at least 1 mol% is independently selected from organofunctional radicals and silicon-bonded hydrogen.

6. Process for preparing the reactive resin composition according to any of Claims 1 to 5, by dispersing (B) in (A) with the proviso that (A) is already free-flowing at 20°C, (A) has been rendered free-flowing by prior heating up to 250°C or (A) has been dissolved by prior dissolution in a suitable solvent to render it free-flowing.

7. Use of the reactive resin composition according to any of Claims 1 to 5 for coatings and for production of moldings, workpieces and foams.

8. Use of the reactive resin composition according to any of Claims 1 to 5 for coating proppants.

9. Process for producing coated proppants, **characterized in that** the reactive resin composition according to any of Claims 1 to 5 is applied to the proppant in free-flowing form - i.e. is already free-flowing at 20°C or melted by heating to 250°C and therefore free-flowing or dissolved in a suitable solvent and therefore free-flowing - together with or without at least one hardener (C) and with or without at least one additive (D), and then hardened.

10. A process for producing coated proppants, **characterized in that**
i) the reactive resin composition is produced as an in situ process in the presence of the proppant, wherein at least one (B) and
at least one (A) which is free-flowing at 20°C, or with (A) that has been rendered free-flowing by prior heating up to 250°C, or with (A) that has been dissolved in a suitable solvent, and
at least one proppant
with or without at least one hardener (C) with or without at least one additive (D) are mixed,
ii) and only then is the curing effected.

11. Coated proppants obtainable from the process according to Claim 9 or 10.

12. Use of the coated proppants according to Claim 10 in fracking production methods for mineral oil and natural gas.

## Revendications

1. Composition de résine réactive, contenant :
- (A) 92 à 99,5 % en poids d'au moins une résine réactive, et
- (B) 0,5 à 8 % en poids d'au moins une résine de silicone,
constituée par des unités des formules (Ia), (Ib), (VII) et (Id) : 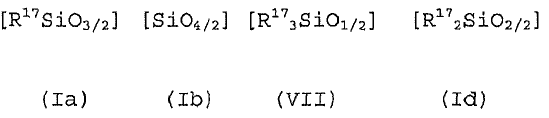 dans lesquelles
les R¹⁷ signifient des radicaux organiques monovalents, substitués ou non substitués, identiques ou différents indépendamment les uns des autres, qui portent ou ne portent pas de groupes fonctionnels, un -OH ou un radical hydrogène,
à condition que
- au moins 20 % en moles de la formule (la) ou (Ib) ou d'un mélange des deux soit contenu dans (B),
- au plus 50 % en moles de la formule (Ib) soit contenu dans (B),
- des groupes alcoxy soient contenus en tant que R¹⁷ à hauteur d'au moins 5 % en poids dans (B).

2. Composition de résine réactive selon la revendication 1, **caractérisée en ce que** (B) contient au moins 8,5 % en poids de groupes alcoxy.

3. Composition de résine réactive selon la revendication 1 ou 2, **caractérisée en ce qu'**au moins 10 % en moles de tous les radicaux R¹⁷ sont indépendamment les uns des autres des radicaux organiques monovalents substitués ou non substitués identiques ou différents contenant au moins 3 atomes C.

4. Composition de résine réactive selon la revendication 1 ou 2, **caractérisée en ce qu'**au moins 1 % en moles de tous les radicaux R¹⁷ sont choisis indépendamment les uns des autres parmi les radicaux organofonctionnels ou l'hydrogène relié au silicium.

5. Composition de résine réactive selon la revendication 3, **caractérisée en ce qu'**encore au moins 1 % en moles de radicaux R¹⁷ supplémentaires sont choisis simultanément indépendamment les uns des autres parmi les radicaux organofonctionnels ou l'hydrogène relié au silicium.

6. Procédé de fabrication de la composition de résine réactive selon l'une quelconque des revendications 1 à 5 par dispersion de (B) dans (A), à condition que (A) soit déjà fluide à 20 °C, que (A) ait été fluidifié par chauffage préalable jusqu'à 250 °C, ou que (A) ait été dissous dans un solvant approprié par dissolution préalable, afin de le fluidifier.

7. Utilisation de la composition de résine réactive selon l'une quelconque des revendications 1 à 5, pour des revêtements et pour la fabrication de pièces moulés, de pièces d'œuvre et de mousses.

8. Utilisation de la composition de résine réactive selon l'une quelconque des revendications 1 à 5 pour le revêtement de moyens de soutènement.

9. Procédé de fabrication de moyens de soutènement revêtus, **caractérisé en ce que** la composition de résine réactive selon l'une quelconque des revendications 1 à 5 est appliquée sur le moyen de soutènement sous forme fluide, c'est-à-dire déjà fluide à 20 °C ou fondue par chauffage jusqu'à 250 °C et ainsi fluidifiée ou dissoute dans un solvant approprié et ainsi fluidifiée, conjointement avec ou sans au moins un agent de durcissement (C) et avec ou sans au moins un additif (D), puis durcie.

10. Procédé de fabrication de moyens de soutènement revêtus, **caractérisé en ce que**
i) la fabrication de la composition de résine réactive a lieu sous la forme d'un procédé in situ en présence du moyen de soutènement,
au moins un (B) et
au moins un (A) fluide à 20 °C ou un (A), qui a été fluidifié par chauffage préalable jusqu'à 250 °C, ou un (A) qui a été dissous dans un solvant approprié, et
au moins un moyen de soutènement,
avec ou sans au moins un agent de durcissement (C), avec ou sans au moins un additif (D),
étant mélangés,
ii) et le durcissement n'a lieu qu'après.

11. Moyens de soutènement revêtus, pouvant être obtenus par le procédé selon la revendication 9 ou 10.

12. Utilisation des moyens de soutènement revêtus selon la revendication 10 dans des procédés d'extraction par fracturation hydraulique pour le pétrole et le gaz naturel.
